Europäisches Patentamt

European Patent Office

Office européen des brevets

(19)

(11) **EP 0 885 849 A1**

(12) **EUROPEAN PATENT APPLICATION**
published in accordance with Art. 158(3) EPC

(43) Date of publication:
23.12.1998 Bulletin 1998/52

(21) Application number: 97933931.4

(22) Date of filing: 18.07.1997

(51) Int. Cl.$^6$: **C02F 1/461**, C25B 9/00

(86) International application number:
PCT/RU97/00226

(87) International publication number:
WO 98/25855 (18.06.1998 Gazette 1998/24)

(84) Designated Contracting States:
BE CH ES GB IE LI

(30) Priority: 11.12.1996 RU 96123069

(71) Applicant:
Western Pacific Company, Inc. Ltd.
Moscow, 127247 (RU)

(72) Inventors:
• NAIDA, Nikolai Nikolaevich
Moscow, 105275 (RU)

• PUSHNYAKOV, Nikolai Karpovich
St.Petersburg, 193076 (RU)

(74) Representative:
Bankes, Stephen Charles Digby et al
BARON & WARREN
18 South End
Kensington
London W8 5BU (GB)

(54) **METHOD FOR STERILISING WATER AND DEVICE FOR REALISING THE SAME**

(57) The present invention relates to a method for sterilising water as well as to a device for realising the same, wherein influent water is treated by the simultaneous action of atomic oxygen, carbonic acid and hydrated ions of hydrogen peroxide in electrolysers that comprise two chambers with cationic exchange membranes (6, 14). When passing through gas separators (5), the catholyte is depleted of its hydrogen and further discharged from the device through a duct (4). The anolyte, which has acquired a pH of between 3 and 4, is depleted of oxygen $O_2$ and carbon dioxide $CO_2$ in gas separators (7) before being fed through a duct (12) for treatment in a second electrolyser. Before entering the anodic chamber, the solution has a pH ranging between 8.5 and 9.0 thanks to the adjunction of a sodium hydrocarbonate solution from a vessel (20). After the electrolysis in the second electrolyser, the catholyte has acquired a pH of between 7.0 and 8.5 in the cathodic chamber (11) and has been depleted of hydrogen in gas separators (13). The catholyte is then discharged from the device through a duct (16) and may be used as a drinkable water that exhibits improved organoleptic and bactoriological quality indices. The device for sterilising water comprises a pair of electrolysers which include cationic exchange membranes and comprise connections from dosing vessels at the anodic chamber inlets. The electrolysers are linked together so that the anodic chamber outlet of the first electrolyser is connected to the anodic and cathodic chamber inlets of the second electrolyser. The anodic chamber outlet of the second electrolyser is in turn connected to the mixing chamber containing the influent water to be treated and fed into the first electrolyser. The cathodic chamber outlets of the first and second electrolysers consist in outlet channels for the solutions obtained from the device, said solutions being drinkable water.

FIG 1

## Description

The invention falls into the field of chemical or physical water processing in particular with electrolysis and is designed to obtain potable water using electrochemical method.

There is a method of water disinfecting based on water ozonization (1). The disadvantage of this method is cumbersome and complicated installation using a toxic substance $O_3$ with strong corrosive properties, so as the care the amount of air should be prepared with to supply it with ozone bubbling the processed water. There is a method of water disinfecting with silver (2). The disadvantage of this method is considerable dependence of disinfecting efficiency on the water composition (elements absorbing ions of silver reduce the disinfecting efficiency), so as the possible accumulation of silver (which is a heavy metal) and its compounds in the human body. There is a method of water clorination with sodium hypochlorite, obtained by electrolyzing water solution of NaCl (3). The disadvantages of the method are insufficient efficiency towards pathogenic bacteria, resistant to acidic environment, low efficiency of chlorine and its compounds in the water when hydrogen is higher than 8, so as worse organoleptic properties of the processed water. There is also an installation consisting of two electrolyzers, tanks for NaCl water solution preparation and a cistern to accumulate the solution of NaOCl obtained electrochemically (4). The disadvantage of this installation is that it is impossible to process separately the same amount of water with alkaline in the cathodic chamber, and with acidic in the anodic chamber by the products of electrochemical reactions.

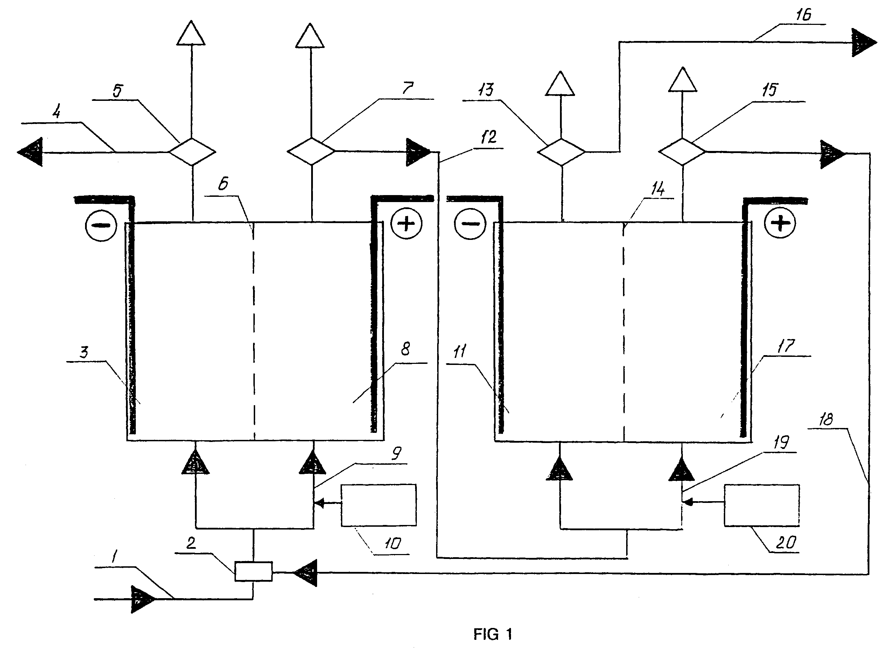

The problem to be resolved with the invention is the improvement of technical and economical characteristics of water. The technical result of this invention is the improvement of organoleptic and bacteriological properties of potable water by using electrochemically obtained carbonic acid $H_2CO_3$, monatomic oxygen O and hydrated ions of hydrogen peroxide $H_2O_2$ as bacteria and compounds oxidizers. Two bichamber electrolyzers with cation-exchange diaphragms are connected as shown at Fig. 1: 1-input of crude water to the cathodic chamber of the first electrolyzer-catholyte removal from the installation as waste water, 2-input of water to the anodic chamber of the first electrolyzer, water mixed with dosed solution of $NaHCO_3$ to the anodic chamber of the second electrolyzer-mixture with the crude water coming to the installation for processing; 3-input of water mixed with the dosed solution of $NaHCO_3$ to the anodic chamber of the first electrolyzer-water processing in the anodic chamber of the first electrolyzer-catholyte discharge from the installation as potable water. Crude water is processed by simultaneous action of oxygen, carbonic acid and hydrated ions of hydrogen peroxide in the two bichamber electrolyzers with cation exchange diaphragms. Water solution of

sodium hydrocarbonate $NaHCO_3$ having pH = 10.5 ... 11.5 is introduced into the anodic chamber of the first electrolyzer, while water solution of $NaHCO_3$ having pH = 8.5 ... 9.0 is introduced into the anodic chamber of the second electrolyzer. Anolyte with pH = 3 ... 4 received after the anodic chamber of the first electrolyzer flows then to both chambers of the second electrolyzer, output of the cathodic chamber is potable water with pH = 7.0 ... 8.5. The anolyte received from the second electrolyzer mixed with the crude water is delivered to the chambers of the first electrolyzer, while catholyte from the first electrolyzer is removed from the installation. Introducing sodium hydrocarbonate into circular anodic circuit allows improving organoleptic and biological properties of the potable water. The point of the method is the simultaneous oxidizing effect of monatomic oxygen, carbonic acid and hydrated ions of hydrogen peroxide, forming and existing only in electrolysis under electrolysis process, on bacteria and compounds possibly present in the water. In order to prevent electrolytes flow and selective pass of $Na^+$ and $H^+$ ions from the anodic chamber to the cathodic chamber, so as to prevent pass of ON ions from the cathodic chamber to the anodic, the electrolyzers have cation exchange diaphragms 6 and 14. When $NaHCO_3$ water solution gets into the anodic chamber of the first electrolyzer, the following reactions take place on the anode under effect of electric current:

$$2HCO_3 - 2e \rightarrow 2CO_2 + H_2O + O';$$

$$H_2O - 2e \rightarrow 2H^+ + O;$$

$$O' + O' \rightarrow O_2$$

Meanwhile in the electrochemical cell of the anodic chamber the following reactions take place:

$$HCO_3 \rightarrow H^+ + CO^{2-}_3$$

$$H^+ + HCO^-_3 - H_2CO_3$$

leaving the electrochemical cell of the anodic chamber the carbonic acid disintegrates:

$$H_2CO_3 - H_2O + CO_2.$$

Period of monatomic oxygen, carbonic acid and hydrated ions of hydrogen peroxide's action on the water depends on the applicable current parameters and on the water flow speed in the anodic chamber of the electrolyzers.

Fig. 1 shows the installation to realize the declared method of water disinfecting: 1, 4, 9, 12, 16, 18, 19-pipelines; 2-mixer; 3, 11-cathodic chambers; 5, 7, 13, 15-gas separators; 6, 14-cation exchange diaphragms; 8, 17-anodic chambers; 10, 20-dosing tanks.

Crude water by pipeline 1 through the mixer 2 dividing into two streams goes to the first electrolyzer by two separate circuits: one of them leads the water to the cathodic chamber 3, and the other, having enriched the water with sodium hydrocarbonate from the dozing tank up to pH = 10.5 ... 11.5 leads it by the pipeline 9 to the anodic chamber 8. Completed the electrolysis process in the first electrolyzer, the catholyte through the gas separator 5 (where hydrogen is removed) and pipeline 4 leaves the installation. The anolyte acquiring at the first electrolyzer the parameters pH = 3 ... 4 leaves the oxygen and $CO_2$ in the gas separator 7 and goes by the pipeline 12 to the second electrolyzer for the further processing. Before the solution enters the anodic chamber its pH increases up to 8.5 ... 9.0 by adding sodium hydrocarbonate from the dosing tank 20. Completed the electrolysis in the second electrolyzer, the catholyte having acquired pH = 7 ... 8.5 in the cathodic chamber and left hydrogen in the gas separator 13 abandons the installation through the pipeline 16 to be used as potable water. Anolyte from the anodic chamber 17 of the second electrolyzer, having left the oxygen and carbon dioxide in the gas separator 15 goes to the mixer 2, mixing with the crude water to be processed in the installation.

The present method of water disinfecting and the installation realizing it are used in industrial galvanic equipment, in electrochemical gas production, in disinfectants and cleaners production, in biotechnologies of the environmental pH correction and in water preparation.

REFERENCE CITED

1. L.L.Paal et al. Handbook on natural and sewage water purification. Moscow, Vysshaya shkola, 1995, 142 p.
2. L.A. Kulsky et al. Handbook on properties, analysis methods and water purification. Part 2, Kiev, Naukova Dumka, 1980.
3. G.J.Nikoladze. Water supply. Moscow, Stroyizdat, 1989, 278 p.
4. G.L. Medrish et al. Natural and sewage water disinfection using electrolysis, Moscow, Stroyizdat, 1982, 31 p.

**Claims**

1. A method of water disinfecting based on electrolysis, comprising influent water treatment by simultaneous action of atomic oxygen, carbonic acid and hydrated ions of hydrogen peroxide in the anode chambers of two bichamber electrolyzers with cation exchange membranes, wherein water solutions of $NaNCO_3$ having pH = 10,5...11,5 is fed into the anode chamber of the first tlectrolyzer, water solution of $NaHCO_3$ having pH = 8,5...9,0 is fed into the anode chamber of the second electrolyzer, anolyte with pH = 3...4 obtained in the anode chamber of the first electrolyzer is delivered to both anode chambers of the second electrolyzer, where of drinkable water of pH = 7,0...8,5 is discharged, anolyte obtained in the second electrolyzer is mixed with influent water at the anode chamber inlets of the electrolyzer, while catholyte from the first electrolyzer is discharged from a device.

2. A device for performing the water disinfecting method of claim 1, comprising two electrolyzers with cation exchange membranes and connections from dosing vessels at the anode chamber in lets, wherein the anode chamber outlet of the first electrolyzer is connected to the anode and cathode chamber inlets of the second electrolyzer is connected to a mixing chamber, containing influent water to be treated and fed into the first electrolyzer, the cathode chamber outlets of the first and second electrolyzers being outlet channels for solutions obtained in the device by the electrochemical method.

FIG 1

# INTERNATIONAL SEARCH REPORT

| | International application No. |
|---|---|
| | PCT/RU 97/00226 |

**A. CLASSIFICATION OF SUBJECT MATTER**

IPC 6 : C02F 1/461, C25B 9/00

According to International Patent Classification (IPC) or to both national classification and IPC

**B. FIELDS SEARCHED**

Minimum documentation searched (classification system followed by classification symbols)

IPC 6 : C02F 1/46, 1/461, C25B 9/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | SU 865829 A (UKRAINSKY INSTITUT INZHENEROV VODNOGO KHOZYAISTVA) 23 September 1981 (23.09.81) | 1,2 |
| A | SU 899486 A (V.G. DERKASOVA et al) 25 January 1982 (25.01.82) | 1,2 |
| A | US 4391693 A (THE DOW CHEMICAL COMPANY) 5 July 1983 (05.07.83) | 1,2 |
| A | FR 2430988 A1 (THE DOW CHEMICAL COMPANY) 8 February 1980 (08.02.80) | 1,2 |
| A | GB 2075061 A (ENVIRONMENTAL SCIENCES ASSOCIATES, INC.) 11 November 1981 (11.11.81) | 1,2 |
| A | EP 0135314 A1 (IMPERIAL CHEMICAL INDUSTRIES PLC) 27 March 1985 (27.03.85) | 1,2 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 October 1997 (20.10.97) | 13 November 1997 (13.11.97) |

| Name and mailing address of the ISA/ | Authorized officer |
|---|---|
| RU | |
| Facsimile No. | Telephone No. |

Form PCT/ISA/210 (second sheet) (July 1992)